# EUROPÄISCHE PATENTSCHRIFT

(11) **EP 2 134 733 B1**
(45) Veröffentlichungstag und Bekanntmachung des Hinweises auf die Patenterteilung: **17.07.2013**
(21) Anmeldenummer: 08735101.1
(22) Anmeldetag: 09.04.2008
(51) Int. Cl.: C07F 15/00

(54) **PALLADIUM(0)-DIBENZYLIDENACETON-KOMPLEXE**
PALLADIUM(0)-DIBENZYLIDENE ACETONE COMPLEXES
COMPLEXES DE PALLADIUM(0) ET DE DIBENZYLIDÈNE-ACÉTONE

(30) Priorität: 18.04.2007 DE 102007018703
(43) Veröffentlichungstag der Anmeldung: 23.12.2009
(73) Patentinhaber: Heraeus Precious Metals GmbH & Co. KG, 63450 Hanau (DE)
(72) Erfinder: WALTER, Richard, 63755 Alzenau (DE); MEYER, Horst, 63674 Altenstadt (DE); VOSS, Steffen, Garden Grove, CA 92845 (US)
(74) Vertreter: Kühn, Hans-Christian
(86) Internationale Anmeldenummer: PCT/EP2008/002785
(87) Internationale Veröffentlichungsnummer: WO 2008/128644

(56) Entgegenhaltungen:
- WO-A-2004/058784
- US-A- 4 347 232
- RETTIG, M. F. ET AL.: "Tetrakis(tert-butyl isocyanide)di-.mu.-chloro-dipalladium(I)" INORGANIC SYNTHESIS, Bd. 28, 1990, Seiten 110-113, XP009102688 in der Anmeldung erwähnt
- UKAI, T., KAWAZURA, H., ISHII, Y., BONNET, J. J. IBERS, J. A.: "Chemistry of Dibenzylideneacetone-Palladium(0) complexes" J. ORGANOMET. CHEM., Bd. 65, 1974, Seiten 253-266, XP002486916 in der Anmeldung erwähnt
- TAKAHASHI, YASUTAKA; ITO, TS.; SAKAI, SHIZUYOSHI; ISHII, YOSHIO: "Novel palladium(0) complex; bis(dibenzylideneacetone)palladium(0)" JOURNAL OF THE CHEMICAL SOCIETY [SECTION D] CHEMICAL COMMUNICATIONS, Bd. 17, 1970, Seiten 1065-1066, XP009102725 in der Anmeldung erwähnt

## Beschreibung

Die Erfindung betrifft Palladium(0)-Dibenzylidenaceton-Komplexe Pdₓ(dba)_{y} und Verfahren zu deren Herstellung. Derartige Komplexe werden für C-C-Kupplungsreaktionen eingesetzt.

Y. Takahashi et al, Journal of the Chemical Society, Chemical Communications 1065 (1970) und Inorganic Synthesis, 28, 110 (1990) beschreibt einen Palladium(0)-Komplex Pd(dba)₂. Zu dessen Herstellung wird zu einer heißen methanolischen Lösung von Na₂PdCl₄ (Takahashi) oder PdCl₂ (Inorganic Synthesis) Natriumacetat (NaAc) und ein Überschuss an dba (dba: Pd >= 3) gegeben. Man lässt die Lösung unter Rühren abkühlen, wobei der Komplex ausfällt. Er wird abfiltriert und mit Wasser und Aceton nacheinander gewaschen.

T. Ukai et al, J. Organomet. Chem. 65, 253 (1974) offenbart die Synthese von Palladium(0)-Dibenzylidenaceton-Komplexen als Pd₂(dba)₃ x CHCl₃. Hierzu wird PdCl₂ zu einer heißen Lösung aus dba-NaOAc und Methanol gegeben. Die Mischung wird 4 Stunden bei 40°C gerührt, wobei das Produkt ausfällt und in Chloroform umkristallisiert wird. Das Chloroform bleibt an den Komplexen gebunden.

Herrmann/Brauer, Synthetic Methods of Organometallic and Inorganic Chemistry, Vol. 1, 160 (1996) beschreibt die Synthese von Pd₂(dba)₃ x dba und verweist auf die zuvor genannten T. Ukai und Y. Takahashi. Entsprechend nachgearbeitete Produkte sind mit erheblichen unlöslichen Anteilen verunreinigt.

M.C. Mazza, C.G. Pierpont, Inorg. Chem., 12, 2955 (1973) beschreibt die Synthese von Pd(dba)₃ x C₆H₆.

M.C. Mazza, C.G. Pierpont, J.C.S., Chem. Comm., 207 (1973) beschreibt die Synthese von Pd₂(dba)₃ x CH₂Cl₂.

Die in der Literatur beschriebenen Produkte wurden nicht vollständig charakterisiert. Deshalb ist weder der Palladiumgehalt der Verbindungen noch die Zusammensetzung durch die vorstehende Literatur genau beschrieben. Der Grund hierfür liegt vermutlich an einer fehlenden Reinigungsmöglichkeit mangels eines geeigneten Lösungsmittels. Beim Auflösen in CKW oder Aromaten entstehen neue Produkte durch Umsetzung mit dem Lösungsmittel.

M.C. Mazza und C.G. Pierpont (Inorg. Chem., 12, 2955 (1973)) schließen auf die Existenz einer reversiblen Serie von Pd-dba-Komplexen: Pd₂(dba)₃, Pd(dba)₂ und Pd(dba)₃ mit Pd-Gehalten von 23,2 %, 18,5 % und 13,1 %.

Nach P. Espinet, A.M. Echavarren (Angew. Chem. 2004, 116, 4808) ist die Bezeichnung als Dimetallkomplex [Pd₂(dba)₃]*dba genauer als Pd(dba)₂.

Für die Analyse von Pdₓ(dba)_{y}-Komplexen besteht das Dilemma, dass die unlöslichen Bestandteile das Ergebnis der Elementaranalyse verfälschen und dass man, sobald man die Pdₓ(dba)_{y}-Komplexe auflöst, zu anderen Verbindungen gelangt, bei denen das Lösungsmittel angelagert ist.

Bei der großtechnischen Herstellung der Palladium(0)-Dibenzylidenaceton-Komplexe kommt es darauf an, dass man ein kristallines Produkt in hoher Ausbeute erhält, welches eine hohe Reinheit aufweist und gut filtrierbar ist. Zur ökonomischen Herstellung der Verbindung ist es weiterhin wichtig, dass die Trocknungszeiten möglichst kurz gehalten werden. Bei der Reinheit ist ganz entscheidend, dass die Verbindung beim Lösen z. B. in CKW oder Aromaten keine oder nur geringe Mengen unlöslicher Anteile aufweist. Damit ist sichergestellt, dass das im Produkt enthaltene Pd in vollem Umfang für die katalytische Anwendung des Produktes zur Verfügung steht. Unlösliche Pd-haltige Anteile und insbesondere metallisches Pd stehen bei homogenen katalytischen Prozessen nicht zur Verfügung. Daher sind solche Verunreinigungen unerwünscht.

Es ist die Aufgabe der Erfindung, die Reinheit der Palladium(0)-Dibenzylidenaceton-Komplexe zu erhöhen, hierfür die unlöslichen Anteile zu minimieren und insbesondere das Anlagern von chlorierten Kohlenwasserstoffen zu vermeiden.

Zur Lösung der Aufgabe wird Pd(dba)₂ mit geringeren unlöslichen Anteilen bereitgestellt, indem ein Pd-haltiges Edukt, insbesondere Pd-Salz mit Dibenzylidenaceton und Natriumacetat in Alkohol umgesetzt wird. Hierzu wird Dibenzylidenaceton in Alkohol vorgelegt, insbesondere gelöst und auf 57°C erwärmt. Das Pd-haltige Edukt, insbesondere Pd-Salz, z. B. PdCl₂, H₂PdCl₄, (NH₄)₂PdCl₄, Na₂PdCl₄ oder K₂PdCl₄ wird in der erwärmten Lösung gelöst und Natriumacetat zugegeben. Das Pd(dba)₂ fällt aus der Lösung aus, die zur vollständigen Abtrennung abgekühlt wird. Das ausgefällte Produkt wird filtriert, zuerst mit Alkohol und dann mit Petroleumbenzin gewaschen und im Vakuum bei 40°C getrocknet. Auf diese Weise lässt sich sehr reines Pd(dba)₂ herstellen. Halogenhaltige, insbesondere chlorierte Kohlenwasserstoffe wurden zur Herstellung der Komplexe vermieden. Das molare Verhältnis von Palladium zu Dibenzylidenaceton des erhaltenen Produkts liegt im Bereich von 1:2 ± 0,1. Auf diese Weise lässt sich bezogen auf unlösliche Anteile in CKW eine Reinheit von 99, vorzugsweise 99,5, insbesondere 99,9 Gew.-% an Palladium(0)-Dibenzylidenaceton-Komplexen bereitstellen, mit vermutlich überwiegendem Anteil an Pd(dba)₂. Die unlöslichen Anteile sind somit auf unter 1 Gew.-%, insbesondere 1 Gew.-‰ reduziert. Halogenhaltige, insbesondere chlorhaltige Verbindungen sind praktisch ausgeschlossen. Ebenso wenig sind aromatische Lösungsmittel eingelagert. Erfindungsgemäß werden weder halogenhaltige noch aromatische Lösungsmittel verwendet oder eingeführt. Unter Verwendung reiner Ausgangsprodukte werden Verunreinigungen durch CKW oder aromatische Lösungsmittel leicht unter 1 Gew.-‰, insbesondere unter 100 ppm und vorzugsweise unter 10 ppm gehalten.

Erfindungsgemäß werden Palladium(0)-Dibenzylidenaceton-Komplexe mit 19 bis 23 Gew.-% Palladiumgehalt, insbesondere 20 bis 21 Gew.%, bereitgestellt, indem Dibenzylidenaceton im Reaktor im Alkohol vorgelegt wird und auf 60°C erhitzt wird. Hierin wird dann ein Pd-haltiges Edukt, insbesondere Pd-Salz, z. B. H₂PdCl₄, (NH₄)₂PdCl₄, K₂PdCl₄, Na₂PdCl₄, oder PdCl₂ gelöst. Zum Ausfällen des Reaktionsprodukts wird Natrium-Acetat zugegeben und abgekühlt. Das ausgefällte Produkt wird filtriert, zuerst mit Alkohol und dann mit Petroleumbenzin gewaschen und im Vakuum bei 40°C getrocknet. Die in CKW unlöslichen Verunreinigungen liegen unter 1 Gew.-%. Der hohe Palladiumgehalt geht einher mit einem hohen Anteil an Pd₂(dba)₃.

Erfindungsgemäß werden Palladium(0)-Dibenzylidenaceton-Komplexe mit 13 bis 17 Gew.-% Palladiumgehalt, insbesondere 15 bis 16,5 Gew.-% bereitgestellt, indem Dibenzylidenaceton in Alkohol auf 50°C erwärmt wird, bevor das Pd-haltige Edukt, insbesondere als Chlorid, z. B. PdCl₂, H₂PdCl₄, (NH₄)₂PdCl_{4,} Na₂PdCl₄ oder K₂PdCl₄ zugegeben wird. Zum Ausfällen des Reaktionsproduktes wird Natrium-Acetat zugegeben und die Reaktionsmischung abgekühlt, das ausgefallene Produkt filtriert, zuerst mit Alkohol und dann mit Petroleumbenzin gewaschen und abschließend im Vakuum bei 40°C getrocknet. Die Verunreinigungen liegen unter 1 Gew.-%. Der geringe Palladiumgehalt geht einher mit einem hohen Anteil an Pd(dba)₃.

Erfindungsgemäß werden Pdₓ(dba)_{y}-Komplexe bereitgestellt, deren Verunreinigung mit organischen Lösungsmitteln oder in CKW unlöslichen Pd-Anteilen unter 5 ‰, vorzugsweise unter 1 ‰ reduziert sind. Die verbleibenden Spuren an Verunreinigungen sind im Wesentlichen Alkohol und Petroleumbenzin. Als Pdₓ(dba)_{y}-Komplexe wurden Pd(dba)₃, Pd(dba)₂ und Pd₂(dba)₃ hergestellt. Die Stöchiometrie der Pdₓ(dba)_{y}-Komplexe liegt deshalb zwischen Pd(dba)₃ und Pd₂(dba)₃.

### Vergleichsbeispiele

### 1.) Synthese nach Inorganic Synthesis, 28, 110 (1990)

Die Synthese wird unter Inertgas durchgeführt. 2,096 g (11,73 mmol) PdCl₂ und 0,686 g (11,73 mmol) NaCl werden unter Argon vorgelegt und mit 59 ml Methanol versetzt.

Nun wird die Reaktionsmischung im verschlossenen Kolben über Nacht 18 Stunden gerührt. Dann wird die dunkelrotbraune Lösung unter Argon über eine G3-Fritte filtriert. Es ist kein Rückstand auf der Fritte zu erkennen.

Die Filtratlösung wird mit 293 ml Methanol in einen 500-ml-3-Halskolben überführt und auf 60°C erwärmt. Bei dieser Temperatur werden 8,563 g (36,54 mmol) Dibenzylidenaceton unter Argon zugegeben. Dann erfolgt die Zugabe von 17,595 g (214,49 mmol) Natriumacetat.

Es fällt ein voluminöser, rötlicher Feststoff aus. Anschließend wird die Reaktionsmischung auf Raumtemperatur abgekühlt. Das Produkt wird abfiltriert und mit 300 ml Methanol, 300 ml Wasser und 300 ml Aceton gewaschen. Das Produkt wird im Vakuum bei Raumtemperatur getrocknet.

### Aussehen: dunkelbrauner Feststoff

### Löslichkeitsversuch:

1,00 g Produkt werden in 150 ml Chloroform gelöst und bei Raumtemperatur 30 Minuten gerührt. Die Lösung wird über einen Membranfilter gesaugt. Mit 30 ml Wasser und 30 ml Aceton wird der Filter nachgewaschen und anschließend über Nacht bei 45°C unter Vakuum getrocknet. Der Rückstand beträgt 1,4 %.

### Ergebnis:

m(Produkt): 6,4 g
Ausbeute bezogen auf Pd: 94 %
Unlösliche Bestandteile in CHCl₃: 1,4 %

### Analyse:

| | Pd [%] | C [%] | O [%] | H [%] |
|---|---|---|---|---|
| Theorie | 18,5 | 71,0 | 5,6 | 4,9 |
| Istwert | 18,2 | 71,08 | 5,65 | 4,92 |

### 2.) Synthese nach Y. Takahashi et al (J. Chem. Soc. Chem. Commun. 1065 (1970))

Die Synthese wird unter Inertgas durchgeführt.

1,55 kg (6616 mmol) Dibenzylidenaceton, 657,9 g (2208 mmol) Na₂PdCl₄ und 56 l Methanol werden im Reaktionskolben auf 57°C erhitzt. Dann erfolgt die Zugabe von 1,47 kg (17920 mmol) Natriumacetat. Es fällt ein voluminöser, rötlicher Feststoff aus.

Anschließend lässt man die Reaktionsmischung auf Raumtemperatur abkühlen. Das Produkt wird abfiltriert und mit 50 1 Wasser und 50 l Aceton gewaschen. Das Produkt wird im Vakuum bei Raumtemperatur getrocknet.

### Aussehen: dunkelbrauner Feststoff

### Löslichkeitsversuch:

1,00 g Produkt wurden in 150 ml Chloroform gelöst und bei Raumtemperatur 30 Minuten gerührt. Die Lösung wurde über einen Membranfilter gesaugt. Mit 30 ml Wasser und 30 ml Aceton wurde der Filter nachgewaschen und anschließend über Nacht bei 45°C unter Vakuum getrocknet. Der Rückstand beträgt 1,1 %.

### Ergebnis:

m(Produkt): 1053 g
Ausbeute bezogen auf Pd: 93 %
Unlösliche Bestandteile in CHCl₃: 1,1 Gew.-%

### Analyse:

| | Pd [%] | C [%] | O [%] | H [%] |
|---|---|---|---|---|
| Theorie | 18,5 | 71,0 | 5,6 | 4,9 |
| Istwert | 20,8 | 68,08 | 5,93 | 4,92 |

### Versuch 1

Die Synthese wurde unter Inertgas durchgeführt. 300 ml Methanol wurden unter Argon im Reaktionskolben vorgelegt und auf 57°C erhitzt. Dann wurden 8,245 g (35,2 mmol) Dibenzylidenaceton und 3,495 g (1,248 g Pd, 11,7 mmol Pd) Na₂[PdCl₄] unter Argon-Durchfluss dazugegeben.

Hierauf wurden 7,80 g (95,1 mmol) Na-Acetat-wasserfrei bei 57°C dem Reaktionsgemisch zugeführt. Nach Abkühlen auf Raumtemperatur wurde der Rührer abgestellt und das Gemisch ließ man 1,5 h stehen, wobei sich das Produkt absetzte. Die überstehende Mutterlauge wurde abdekantiert und das Produkt wurde mit 300 ml Waschlösung (Methanol / VE-Wasser =1/1) NaCl-frei gewaschen. Das Produkt wurde mit 70 ml Wasser (Chlorid-Test: negativ) und anschließend mit 300 ml Aceton und 200 ml Petroleumbenzin gewaschen. Über Nacht wurde das Produkt im Vakuum bei 40°C getrocknet.

### Aussehen: rötlich-brauner Feststoff

### Löslichkeitsversuch:

1,00 g Produkt wurden in 150 ml Chloroform gelöst und bei Raumtemperatur 30 Minuten gerührt. Die Lösung wurde über einen Membranfilter gesaugt. Mit 30 ml Wasser und 30 ml Aceton wurde der Filter nachgewaschen und anschließend wurde der Filter über Nacht bei 45°C unter Vakuum getrocknet. Der Rückstand betrug 0%.

### Ergebnis:

m(Produkt): 6,4 g

Ausbeute bezogen auf Pd: 95,4%
Unlösliche Bestandteile in CHCl₃: 0%

### Analyse:

| | Pd [%] | C [%] | O [%] | H [%] |
|---|---|---|---|---|
| Theorie Pd(dba)₂ | 18,5 | 71 | 5,6 | 4,9 |
| Istwert | 18,6 | 70,81 | 5,66 | 4,85 |

### Versuch 2

Die Synthese wurde wie in Versuch 1 durchgeführt, jedoch wurde die Umsetzung bei einer Anfangstemperatur von 50°C durchgeführt.

### Ergebnis:

m(Produkt): 7,05 g
Ausbeute bezogen auf Pd: 92,4 %
Unlösliche Bestandteile in CHCl₃: 0,2 %

### Analyse:

| | Pd [%] | C [%] | O [%] | H [%] |
|---|---|---|---|---|
| Theorie Pd(dba)₂ | 18,5 | 71 | 5,6 | 4,9 |
| Istwert | 16,35 | 72,47 | 5,75 | 5,02 |

### Versuch 3

Die Synthese wurde wie in Versuch 1 durchgeführt, jedoch wurde die vierfache Ansatzgröße gewählt. Die Umsetzung wurde bei einer Anfangstemperatur von 60°C durchgeführt.

### Ergebnis:

m(Produkt): 24,682 g
Ausbeute bezogen auf Pd: 96,4%
Unlösliche Bestandteile in CHCl₃: 0,2%

### Analyse:

| | Pd [%] | C [%] | O [%] | H [%] |
|---|---|---|---|---|
| Theorie Pd(dba)₂ | 18,5 | 71 | 5,6 | 4,9 |
| Istwert | 19,5 | 70,34 | 5,41 | 4,8 |

### Versuch 4

Die Synthese wurde wie in Versuch 3 durchgeführt. Die Umsetzung wurde bei einer Anfangstemperatur von 60°C durchgeführt.

### Ergebnis:

m(Produkt): 25,0 g
Ausbeute bezogen auf Pd: 96,2%
Unlösliche Bestandteile in CHCl₃: 0%

### Analyse:

| | Pd [%] | C [%] | O [%] | H [%] |
|---|---|---|---|---|
| Theorie Pd(dba)₂ | 18,5 | 71 | 5,6 | 4,9 |
| Istwert | 19,2 | 70,55 | 5,59 | 4,96 |

### Versuch 5

Die Synthese wurde wie in Versuch 1 durchgeführt, jedoch wurde die Umsetzung bei einer Anfangstemperatur von 60°C durchgeführt und 5 Minuten bei der Temperatur gehalten; erst danach wurde gekühlt.

### Ergebnis:

m(Produkt): 6,15 g
Ausbeute bezogen auf Pd: 99,5%
Unlösliche Bestandteile in CHCl₃: 0,1%

### Analyse:

| | Pd [%] | C [%] | O [%] | H [%] |
|---|---|---|---|---|
| Theorie | 18,5 | 71 | 5,6 | 4,9 |
| Istwert | 20,2 | 69,33 | 5,6 | 4,9 |

## Patentansprüche

1. Palladium(0)-Dibenzylidenaceton-Komplexe Pdₓ(dba)_{y} mit y/x von 1,5 bis 3, **dadurch gekennzeichnet, dass** die Komplexe in einer Reinheit von mindestens 99,5 Gew.-% vorliegen, bezogen auf unlösliche Anteile in CKW.

2. Palladium(0)-Dibenzylidenaceton-Komplexe nach Anspruch 1, **dadurch gekennzeichnet, dass** die Komplexe in einer Reinheit von mindestens 99,9 Gew.-% vorliegen, bezogen auf unlösliche Anteile in CKW.

3. Palladium(0)-Dibenzylidenaceton-Komplexe nach Anspruch 1 oder 2, **dadurch gekennzeichnet, dass** sie weniger als 1 Gew.-‰ halogenierte Kohlenwasserstoffe aufweisen.

4. Palladium(0)-Dibenzylidenaceton-Komplexe nach Anspruch 3, **dadurch gekennzeichnet, dass** sie weniger als 100 ppm halogenierte Kohlenwasserstoffe aufweisen.

5. Palladium(0)-Dibenzylidenaceton-Komplexe nach Anspruch 4, **dadurch gekennzeichnet, dass** sie weniger als 10 ppm halogenierte Kohlenwasserstoffe aufweisen.

6. Palladium(0)-Dibenzylidenaceton-Komplexe nach einem der Ansprüche 1 bis 5, **dadurch gekennzeichnet, dass** das molare Verhältnis von Palladium zu Dibenzylidenaceton im Bereich von 1:1,5 bis 1:1,8 liegt.

7. Palladium(0)-Dibenzylidenaceton-Komplexe nach einem der Ansprüche 1 bis 5, **dadurch gekennzeichnet, dass** das molare Verhältnis von Palladium zu Dibenzylidenaceton im Bereich von 1:1,8 bis 1:2,2 liegt.

8. Palladium(0)-Dibenzylidenaceton-Komplexe nach Anspruch 7, **dadurch gekennzeichnet, dass** das molare Verhältnis von Palladium zu Dibenzylidenaceton im Bereich von 1:1,9 bis 1:2,1 liegt.

9. Palladium(0)-Dibenzylidenaceton-Komplexe nach einem der Ansprüche 1 bis 5, **dadurch gekennzeichnet, dass** das molare Verhältnis von Palladium zu Dibenzylidenaceton im Bereich von 1:2,5 bis 1:3 liegt.

10. Verwendung von Pdₓ(dba)_{y}-Komplexen nach einem der vorhergehenden Ansprüche zur Bestimmung deren Stöchiometrie mittels Elementaranalyse.

11. Verfahren zur Herstellung von Pdₓ(dba)_{y}-Komplexen aus einem Pd-haltigen Edukt und Dibenzylidenaceton (dba) in Alkohol, **dadurch gekennzeichnet, dass** zuerst eine auf über 40°C vorgewärmte Lösung des dba im Alkohol vorgelegt wird und danach das Pd-haltige Edukt der vorgewärmten Lösung zugegeben wird, worauf die Komplexe mit einer Base ausgefällt werden.

## Claims

1. Palladium(0) dibenzylidenacetone complexes Pdₓ(dba)_{y} with y/x ranging from 1.5 to 3, **characterized in that** the complexes are available in a purity of at least 99.5 per cent by weight in relation to insoluble components in chlorinated hydrocarbons.

2. Palladium(0) dibenzylidenacetone complexes according to Claim 1, **characterized in that** the complexes are available in a purity of at least 99.9 per cent by weight in relation to insoluble components in chlorinated hydrocarbons.

3. Palladium(0) dibenzylidenacetone complexes according to Claim 1 or 2, **characterized in that** they comprise less than 1 per mill by weight of halogenated hydrocarbons.

4. Palladium(0) dibenzylidenacetone complexes according to Claim 3, **characterized in that** they comprise less than 100 ppm of halogenated hydrocarbons.

5. Palladium(0) dibenzylidenacetone complexes according to Claim 4, **characterized in that** they comprise less than 10 ppm of halogenated hydrocarbons.

6. Palladium(0) dibenzylidenacetone complexes according to any one of Claims 1 to 5, **characterized in that** the molar ratio of palladium to dibenzylidenacetone is within a range from 1:1.5 to 1:1.8.

7. Palladium(0) dibenzylidenacetone complexes according to any one of Claims 1 to 5, **characterized in that** the molar ratio of palladium to dibenzylidenacetone is within a range from 1:1.8 to 1:2.2.

8. Palladium(0) dibenzylidenacetone complexes according to Claim 7, **characterized in that** the molar ratio of palladium to dibenzylidenacetone is within a range from 1:1.9 to 1:2.1.

9. Palladium(0) dibenzylidenacetone complexes according to any one of Claims 1 to 5, **characterized in that** the molar ratio of palladium to dibenzylidenacetone is within a range from 1:2.5 to 1:3.

10. A use of Pdₓ(dba)_{y} complexes according to any one of the preceding claims for determining the stoichometry thereof by means of elementary analysis.

11. A method for the manufacture of Pdₓ(dba)_{y} complexes from a Pd-containing reactant and dibenzylidenacetone (dba) in alcohol, **characterized in that**, at first, a solution of the dba that is preheated to more than 40 °C is received in alcohol and, thereafter, the Pd-containing reactant is added to the preheated solution, whereupon the complexes are precipitated with a base.

## Revendications

1. Complexes de palladium(0)-dibenzylidène acétone Pdₓ(dba)_{y} avec y/x de 1,5 à 3, **caractérisés en ce que** les complexes sont présents dans une pureté d'au moins 99,5 % en poids par rapport aux parties insolubles dans des hydrocarbures chlorés.

2. Complexes de palladium(0)-dibenzylidène acétone selon la revendication 1, **caractérisés en ce que** les complexes sont présents dans une pureté d'au moins 99,9 % en poids par rapport aux parties insolubles dans des hydrocarbures chlorés.

3. Complexes de palladium(0)-dibenzylidène acétone selon la revendication 1 ou 2, **caractérisés en ce qu'**ils présentent moins de 1 % en poids d'hydrocarbures halogénés.

4. Complexes de palladium(0)-dibenzylidène acétone selon la revendication 3, **caractérisés en ce qu'**ils présentent moins de 100 ppm d'hydrocarbures halogénés.

5. Complexes de palladium(0)-dibenzylidène acétone selon la revendication 4, **caractérisés en ce qu'**ils présentent moins de 10 ppm d'hydrocarbures halogénés.

6. Complexes de palladium(0)-dibenzylidène acétone selon l'une quelconque des revendications 1 à 5, **caractérisés en ce que** le rapport molaire entre palladium et dibenzylidène acétone se situe dans la plage de 1/1,5 à 1/1,8.

7. Complexes de palladium(0)-dibenzylidène acétone selon l'une quelconque des revendications 1 à 5, **caractérisés en ce que** le rapport molaire entre palladium et dibenzylidène acétone se situe dans la plage de 1/1,8 à 1/2,2.

8. Complexes de palladium(0)-dibenzylidène acétone selon la revendication 7, **caractérisés en ce que** le rapport molaire entre palladium et dibenzylidène acétone se situe dans la plage de 1/1,9 à 1/2,1.

9. Complexes de palladium(0)-dibenzylidène acétone selon l'une quelconque des revendications 1 à 5, **caractérisés en ce que** le rapport molaire entre palladium et dibenzylidène acétone se situe dans la plage de 1/2,5 à 1/3.

10. Utilisation de complexes de Pdₓ(dba)_{y} selon l'une quelconque des revendications précédentes pour la détermination de leur stoechiométrie au moyen d'une analyse élémentaire.

11. Procédé de fabrication de complexes de Pdₓ(dba)_{y} à partir d'un réactif contenant du Pd et de dibenzylidène acétone (dba) dans de l'alcool, **caractérisé en ce qu'**une solution du dba préchauffée à plus de 40°C est d'abord placée dans l'alcool, puis le réactif contenant du Pd est ajouté à la solution préchauffée, suite à quoi les complexes sont précipités avec une base.
